# EUROPÄISCHE PATENTSCHRIFT

(11) **EP 0 357 867 B1**
(45) Veröffentlichungstag und Bekanntmachung des Hinweises auf die Patenterteilung: **24.02.1993**
(21) Anmeldenummer: 89107093.0
(22) Anmeldetag: 20.04.1989
(51) Int. Cl.: F16F 15/12

(54) **Torsionsschwingungsdämpfer**
Torsional vibration damper
Amortisseur d'oscillations de torsion

(30) Priorität: 23.07.1988 DE 3825062
(43) Veröffentlichungstag der Anmeldung: 14.03.1990
(73) Patentinhaber: Firma Carl Freudenberg, 69469 Weinheim (DE)
(72) Erfinder: Andrä, Rainer-Horst, Dr., D-6250 Limburg 5 (DE)

(56) Entgegenhaltungen:
- EP-A- 0 266 479
- DE-U- 7 604 193
- FR-A- 957 151
- FR-A- 2 135 664
- FR-A- 2 570 785
- US-A- 2 948 129
- PATENT ABSTRACTS OF JAPAN, Band 9, Nr. 103 (M-377)[1826], 8. Mai 1985; & JP-A-59 226 727 (MAZDA K.K.) 19-12-1984

## Beschreibung

Die Erfindung betrifft einen Torsionsschwingungsdämpfer nach dem Oberbegriff von Anspruch 1.

Ein solcher Torsionsschwingungsdämpfer ist aus der US-A-2,948,129 bekannt. Die Möglichkeiten der Anpassung an bestimmte Dämpfungserfordernisse des Anwendungsfalles, insbesondere die Dämpfung von Längs- und/oder Verkantungsschwingungen, ist dabei wenig befriedigend.

Der Erfindung liegt die Aufgabe zugrunde, einen solchen Torsionsschwingungsdämpfer derart weiterzuentwickeln, daß sich eine verbesserte Anpassungsmöglichkeit an besondere Gegebenheiten des Anwendungsfalles ergibt.

Diese Aufgabe wird erfindungsgemäß mit einem Torsionsschwingungsdämpfer der eingangs genannten Art gelöst, der die kennzeichnenden Merkmale von Anspruch 1 aufweist. Auf vorteilhafte Ausgestaltungen nehmen die Unteransprüche Bezug.

Bei dem erfindungsgemäßen Torsionsschwingungsdämpfer weist der Gummiring in wenigstens einer Längsebene des Torsionsschwingungsdämpfers ein glockenkurvenähnliches Profil auf, wobei das Profil eine Gipfelhöhe H hat, die in Umfangsrichtung fortschreitend variiert ist. Das Dämpfungsverhalten läßt sich dadurch verschiedenen Anwendungsfällen in einer gezielten Weise anpassen, insbesondere auch Anwendungsfällen, in denen die zu dämpfenden Drehschwingungen von Längs- und Verkantungsschwingungen überlagert sind. Außerdem ergibt sich eine einfache Herstellbarkeit des erfindungsgemäßen Torsionsschwingungsdämpfers.

Es ist folglich möglich, den Gummiring unabhängig von der Herstellung des Trägheits- und des Nabenringes zu erzeugen und in einem abschließenden Montagevorgang mit diesem zu einer in sich geschlossenen Einheit zusammenzuführen. Ebensogut ist es indessen möglich, den Gummiring durch unmittelbares Einspritzen und Vulkanisieren einer Gummimischung in dem Ringspalt zwischen dem Trägheits- und dem Nabenring zu bilden und zu verfestigen und hierbei zugleich eine haftende Verbindung einerseits zu dem Trägheitsring und andererseits zu dem Nabenring zu realisieren.

Vorteilhaft an dieser Ausgestaltung ist insbesondere die Möglichkeit, zusätzlich zu der Dämpfungswirksamkeit in Umfangsrichtung eine Dämpfungswirksamkeit zu erzielen, die in bezug auf Längs- und/oder Verkantungsschwingungen des zu bedämpfenden Maschinenteils wirksam ist, beispielsweise der Schwingungen einer Kurbelwelle. In einem solchen Falle kann der Gummiring in wenigstens einer Längsebene des Torsionsschwingungsdämpfers ein glockenkurvenähnliches Profil aufweisen mit einer Gipfelhöhe H, die in Umfangsrichtung variiert ist.

Die Variationsmöglichkeiten sind dabei vielfältig und sie können solche umfassen, bei denen wenigstens eine Umfangsstelle mit neutraler oder negativer Gipfelhöhe H1 vorhanden ist. Beispielsweise im letztgenannten Falle ergibt sich auch unter Verwendung eines eingeschlossenen Gummiringes eine hochgradig stabile gegenseitige Zuordnung zwischen dem Naben- und dem Trägheitsring in axialer Richtung. Zusätzliche Sicherungsmaßnahmen in dieser Hinsicht sind zumeist entbehrlich.

Im Hinblick auf die Vermeidung von Unwuchterscheinungen hat es sich als vorteilhaft bewährt, wenn der Gummiring an wenigstens zwei Umfangsstellen ein übereinstimmendes Profil aufweist, wobei die Umfangsstellen in Umfangsrichtung gleichmäßig verteilt sind. Die Anzahl der Umfangsstellen ist an sich beliebig und wird insbesondere durch die Größe des Torsionsschwingungsdämpfers bestimmt. Bei PKW-Baugrößen genügen im allgemeinen drei bis vier entsprechend ausgebildete, gleichmäßig auf dem Umfang verteilte Umfangsstellen eines übereinstimmenden Profils.

Der Gegenstand der vorliegenden Erfindung wird nachfolgend anhand der Zeichnung weiter erläutert. Es zeigen:
- Fig. 1: eine einfache Bauform des erfindungsgemäßen Torsionsschwingungsdämpfers in längsgeschnittener Darstellung.
- Fig. 2: den Torsionsschwingungsdämpfer nach Figur 1 in quergeschnittener Darstellung.

Figuren 3 und 4 alternative Ausführungsformen von Gummiringen in der Form, die sich im eingebauten Zustand ergibt.

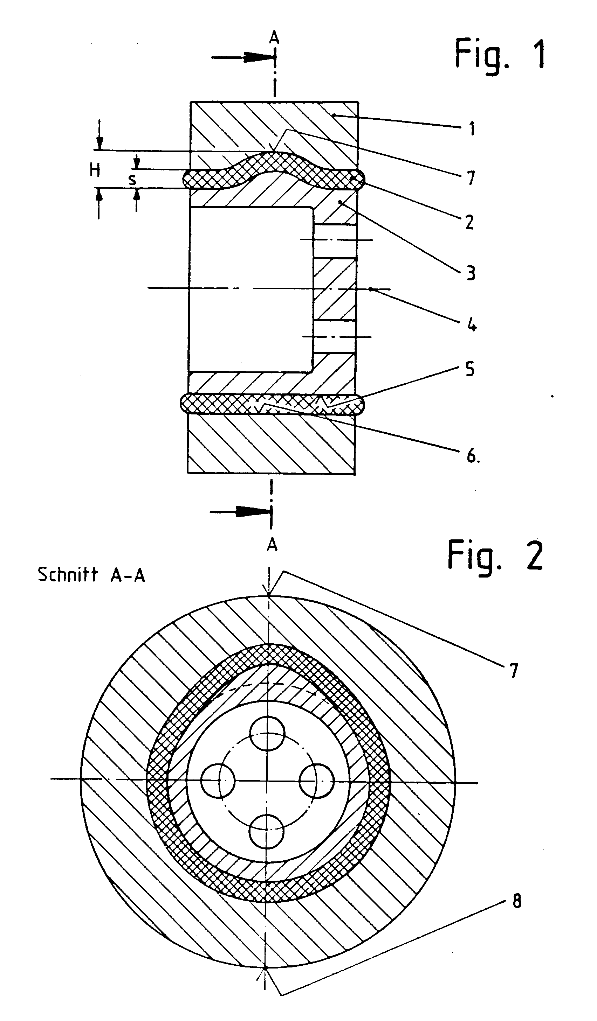

Der in Figur 1 gezeigte Torsionsschwingungsdämpfer besteht aus dem Trägheitsring 1, der mittels eines in sich geschlossenen Gummiringes 2 auf dem Außenumfang des Nabenringes 3 festgelegt ist. Die den Gummiring 2 berührenden Haftflächen 5, 6 des Naben- und des Trägheitsringes 3, 1 weisen dabei in Umfangsrichtung aufeinanderfolgende Teilbereiche auf, die verschieden große Abstände von der Rotationsachse 4 haben und die gleichmäßig ineinander übergehend ausgebildet sind. Die Abstände sind jedoch nicht nur in Längsrichtung des Torsionsschwingungsdämpfers modifiziert, sondern darüber hinaus auch in Umfangsrichtung, wie anhand der Figur 2 zu ersehen. Ausgehend von dem Gipfelpunkt 7 fällt der Außendurchmesser des Gummiringes 2 im mittleren Bereich seiner axialen Erstreckung gleichmäßig ab in Richtung des radial auf der gegenüberliegenden Seite liegenden Punktes 8. Neben einer guten Axialführung des Trägheitsringes 1 auf dem Nabenring 3 wird hierdurch eine relativ weiche Lagerung des Trägheitsringes erzielt. Es können dadurch Drehschwingungen relativ großer Verdrehamplitude wirksam bedämpft werden.

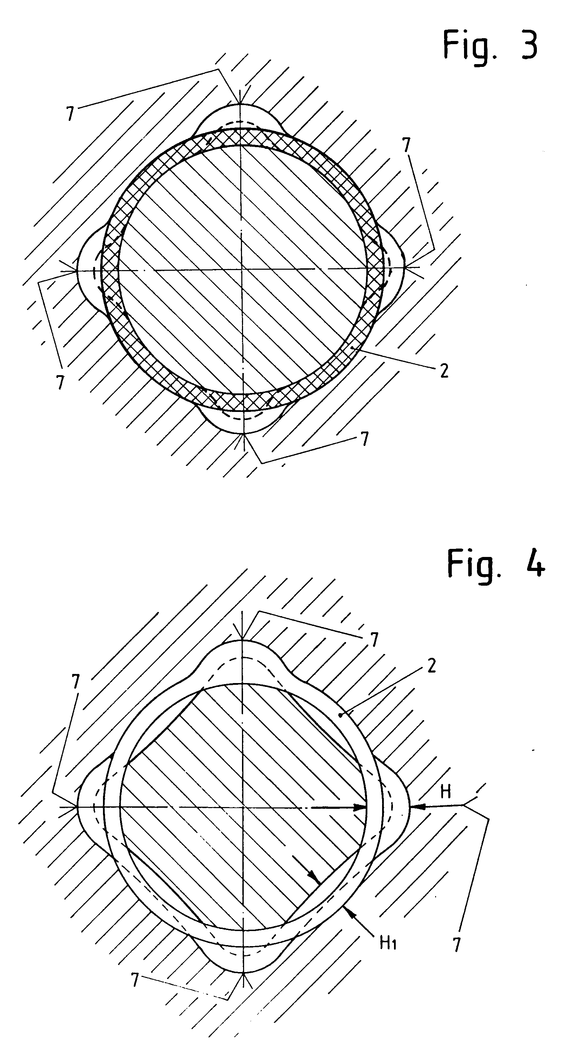

Die in den Figuren 3 und 4 gezeigten Gummiringe weisen in Umfangsrichtung jeweils vier aufeinanderfolgende Stellen eines übereinstimmenden Profils auf. Benachbarte Stellen haben dabei übereinstimmende Abstände voneinander.

Bei der Ausführung nach Figur 3 weist der Gummiring 2 in Umfangsrichtung vier aufeinanderfolgende Teilbereiche einer voneinander abweichenden Form auf. Das Längsprofil des Gummiringes läßt sich dabei an den vier Umfangsstellen (Gipfelpunkte 7) als glockenkurvenähnlich beschreiben, wobei die jeweilige Gipfelhöhe in Umfangsrichtung variiert ist. Die radiale Dicke des Gummiringes kann dadurch an jeder beliebigen Umfangsstelle von übereinstimmender Größe sein im Bedarfsfalle aber auch so gestaltet werden, daß sich voneinander abweichende Werte ergeben.

Die Ausführung des Gummiringes 2 nach Figur 4 ist der vorstehend beschriebenen ähnlich, es sind indessen in Umfangsrichtung gleichmäßig verteilte Bereiche vorhanden, die zwischen den mit Gipfelpunkt 7 bezeichneten Stellen liegen und bei denen die Gipfelhöhe den negativen Wert H1 aufweist. Ein Torsionsschwingungsdämpfer mit einem solcherart ausgebildeten Gummiring zeichnet sich dadurch nicht nur in axialer Richtung durch eine besondere Formstabilität aus, sondern zusätzlich durch ein ausgezeichnetes Dämpfungsverhalten in bezug auf die Einleitung von Längs- und/oder Verkantungsschwingungen des zu bedämpfenden Maschinenteiles.

## Patentansprüche

1. Torsionsschwingungsdämpfer mit einer Rotationsachse (4), bei dem ein Trägheitsring (1) mittels eines Gummiringes (2) auf dem Außenumfang eines Nabenringes (3) festgelegt ist, wobei die den Gummiring (2) berührenden Haftflächen (5, 6) des Naben- (3) und des Trägheitsringes (1) in Umfangsrichtung aufeinanderfolgende Teilbereiche aufweisen, die verschieden große Abstände von der Rotationsachse (4) haben und die gleichmäßig ineinander übergehend ausgebildet sind, dadurch gekennzeichnet, daß der Gummiring (2) in wenigstens einer Längsebene des Torsionsschwingungsdämpfers ein glockenkurvenähnliches Profil aufweist und daß das Profil eine Gipfelhöhe H hat, die in Umfangsrichtung fortschreitend variiert ist.

2. Torsionsschwingungsdämpfer nach Anspruch 1, dadurch gekennzeichnet, daß die Variierung wenigstens eine Umfangsstelle mit negativer Gipfelhöhe H1 umfaßt.

3. Torsionsschwingungsdämpfer nach einem der Ansprüche 1 oder 2, dadurch gekennzeichnet, daß der Gummiring (2) wenigstens zwei Umfangsstellen einer übereinstimmenden Profilform aufweist und daß die Umfangsstellen in Umfangsrichtung gleiche Abstände voneinander haben.

## Claims

1. A torsional vibration damper, having an axis of rotation (4), in which an inertia ring (1) is fixed to the outside circumference of a hub ring (3) by means of a rubber ring (2), the adhesive surfaces (5, 6) of the hub ring (3) and of the inertia ring (1) contacting the rubber ring (2) having in the circumferential direction successive partial regions which have spacings of different sizes from the axis of rotation (4) and are constructed to merge evenly into one another, characterised in that the rubber ring (2) has a profile similar to a bell-shaped curve at least in one longitudinal plane of the torsional vibration damper, and in that the profile has a peak height H which is varied continuously in the circumferential direction.

2. A torsional vibration damper according to claim 1, characterised in that the variation comprises at least one circumferential point with a negative peak height H1.

3. A torsional vibration damper according to any of claims 1 or 2, characterised in that the rubber ring (2) has at least two circumferential points with a corresponding profile shape, and in that the circumferential points have equal spacings from one another in the circumferential direction.

## Revendications

1. Amortisseur d'oscillations de torsion comportant un axe de rotation (4), où un anneau d'inertie (1) est fixé au moyen d'un anneau (2) en caoutchouc sur la périphérie extérieure d'un anneau formant moyeu (3), les surfaces d'adhérence (5, 6) en contact avec l'anneau (2) en caoutchouc, de l'anneau formant moyeu (3) et de l'anneau d'inertie (1) comportant des zones partielles se suivant dans une direction circonférentielle, qui sont espacées de distances différentes de l'axe de rotation (4) et qui sont agencées de façon à s'engager mutuellement l'une dans l'autre uniformément, caractérisé en ce que l'anneau (2) en caoutchouc comporte, dans au moins un plan longitudinal de l'amortisseur d'oscillations de torsion, un profil analogue à une courbe en cloche et en ce que le profil a une hauteur de sommet H qui varie progressivement dans une direction circonférentielle.

2. Amortisseur d'oscillations de torsion selon la revendication 1, caractérisé en ce que la variation comporte au moins une zone périphérique ayant une hauteur de sommet (H1) négative.

3. Amortisseur d'oscillations de torsion selon une des revendications 1 ou 2, caractérisé en ce que l'anneau (2) en caoutchouc comporte au moins deux zones périphériques ayant des profils de forme identique et en ce que les zones périphériques sont espacées de distances identiques dans une direction circonférentielle.
